# EUROPEAN PATENT SPECIFICATION

(11) **EP 3 764 447 B1**
(45) Date of publication and mention of the grant of the patent: **18.06.2025**
(21) Application number: 19763876.0
(22) Date of filing: 15.02.2019
(51) Int. Cl.: H01M 8/1213, H01M 4/86, H01M 8/1246, H01M 8/1231, H01M 4/88, H01M 4/90, H01M 8/1253

(54) **CELL STRUCTURE**
ZELLSTRUKTUR
STRUCTURE DE CELLULE

(30) Priority: 06.03.2018 JP 2018039521
(43) Date of publication of application: 13.01.2021
(73) Proprietor: SUMITOMO ELECTRIC INDUSTRIES, LTD., Osaka-shi, Osaka 541-0041 (JP)
(72) Inventor: HIRAIWA, Chihiro, Osaka-shi, Osaka 541-0041 (JP); OGAWA, Mitsuyasu, Osaka-shi, Osaka 541-0041 (JP); MIZUHARA, Naho, Osaka-shi, Osaka 541-0041 (JP); TAWARAYAMA, Hiromasa, Osaka-shi, Osaka 541-0041 (JP); HIGASHINO, Takahiro, Osaka-shi, Osaka 541-0041 (JP); MAJIMA, Masatoshi, Osaka-shi, Osaka 541-0041 (JP)
(74) Representative: Boult Wade Tennant LLP
(86) International application number: PCT/JP2019/005492
(87) International publication number: WO 2019/171905

(56) References cited:
- JP-A- 2016 100 196
- JP-A- 2016 103 488
- JP-A- 2017 117 663
- JP-A- 2017 123 231
- JP-A- H0 250 983
- US-A1- 2012 178 016
- US-B2- 9 496 559

## Description

### TECHNICAL FIELD

The present disclosure relates to a cell structure. BACKGROUND ART

A fuel cell is a device that generates power by an electrochemical reaction between a fuel such as hydrogen and air (or oxygen). A fuel cell can directly convert chemical energy into electricity and thus generate power significantly efficiently. Inter alia, a solid oxide fuel cell (hereinafter referred to as an "SOFC") having an operating temperature of 700°C or higher, about 800°C to 1000°C, in particular, has a fast reaction speed, and it is easy to handle as it has a cell structure with its constituent elements all being solid.

The cell structure includes a cathode, an anode, and a solid electrolyte layer interposed between the cathode and the anode. When the cell structure becomes smaller in resistance, the fuel cell provides an increased output. The cell structure's resistance (cell resistance) is dominated by the solid electrolyte layer. Therefore, for example, PCT national publication No. 2016-076078 (PTL 1) proposes to reduce a value of a solid electrolyte layer in resistance by modifying the solid electrolyte layer's composition. Reducing the solid electrolyte layer in thickness can also reduce a value of the layer in resistance.

### CITATION LIST

### PATENT LITERATURE

PTL 1: PCT national publication No. 2016-076078

### SUMMARY OF INVENTION

One aspect of the present disclosure is a cell structure including a cathode, an anode, and a solid electrolyte layer interposed between the cathode and the anode, the cathode being in the form of a sheet, the anode being in the form of a sheet, the solid electrolyte layer being in the form of a sheet, the solid electrolyte layer being disposed on the anode, the cathode being disposed on the solid electrolyte layer, the cathode having a resistance Rc, the anode and the solid electrolyte layer having a resistance Ra, the resistance Rc and the resistance Ra satisfying a relationship of Rc/Ra ≥ 0.3, the cathode including a first metal oxide having a perovskite crystal structure, the cathode having a thickness larger than 15 µm and equal to or less than 30 µm.

### BRIEF DESCRIPTION OF DRAWINGS

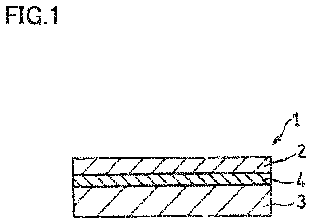

Fig. 1 is a schematic cross section of a cell structure according to an embodiment of the present disclosure.

### DETAILED DESCRIPTION

### [Problems to be Solved by the Present Disclosure]

A solid electrolyte layer thus controlled in composition and thickness has a value in resistance reduced to a limit. Then, cell resistance is dominated by a component other than the solid electrolyte layer, that is, a cathode.

### [Advantageous Effect of the Present Disclosure]

According to the present disclosure, a cell structure has a reduced resistance, and accordingly, a fuel cell provides an increased output.

### [Description of Embodiments of the Present Disclosure]

Initially, the contents of an embodiment of the present disclosure will be discussed.

A cell structure according to an embodiment of the present disclosure is according to claim 1.
The cell structure thus has a reduced value in resistance.

The first metal oxide may be a compound represented by the following formula (1):

Al_{1 - x}B1ₓC1_{y}O_{3 - δ} ... formula (1),

where an element A1 is at least one selected from the group consisting of La, Sm, and Ba, an element B1 is at least one selected from the group consisting of Sr and Ca, an element C1 is at least one selected from the group consisting of Fe, Co, Mn, and Ni, 0 < x < 1, 0 < y ≤ 1, and δ represents an oxygen vacancy concentration.

The solid electrolyte layer may include a second metal oxide having a perovskite crystal structure, and the second metal oxide may be a proton conductor represented by the following formula (2):

A2ₘB2ₙC2_{1- n}O₃ - _{δ} ... formula (2),

where an element A2 is at least one selected from the group consisting of Ba, Ca and Sr, an element B2 is at least one selected from the group consisting of Ce and Zr, an element C2 is at least one selected from the group consisting of Y, Yb, Er, Ho, Tm, Gd, In and Sc, 0.85 ≤ m ≤ 1, 0.5 ≤ n < 1, and δ represents an oxygen vacancy concentration.

The solid electrolyte layer may have a thickness of 5 µm or more and 30 µm or less.

The cathode may have a thickness of 20 µm or more and 30 µm or less. In that case, the cell structure has a further reduced value in resistance.

### [Details of Embodiment of the Invention]

A specific example of an embodiment of the present invention will now be described below with reference to the drawings, as appropriate. It should be noted that the present invention is not limited to these examples; rather, it is indicated by the appended claims.

In the present specification, an expression in the form of "X to Y" means a range's upper and lower limits (that is, X or more and Y or less), and when X is not accompanied by any unit and Y is alone accompanied by a unit, X has the same unit as Y.

A cell structure according to the present embodiment includes a cathode, an anode, and a solid electrolyte layer interposed between the cathode and the anode. The cathode, the anode and the solid electrolyte layer are for example sintered and thus integrated together.

In one aspect of the present embodiment, it is also possible to understand that the cathode is in the form of a sheet, the anode is in the form of a sheet, the solid electrolyte layer is in the form of a sheet, the solid electrolyte layer is disposed on the anode, and the cathode is disposed on the solid electrolyte layer.

In the present embodiment will be discussed a case in which the relationship of Rc/Ra ≥ 0.3 is satisfied, that is, the cathode's resistance Rc has a high ratio of contribution to the resistance of the cell structure, and the cathode includes a first metal oxide having a perovskite crystal structure.

The cell structure has a resistance (a cell resistance), which is a sum of reaction resistance and direct-current resistance. The cathode has an electrical resistance Rc, which is a sum of the cathode's reaction resistance and the cathode's direct-current resistance R_{DCc}. The anode and the solid electrolyte layer have an electrical resistance Ra, which is a sum of the anode's reaction resistance a sum R_{DCe} in direct-current resistance of the anode and the solid electrolyte layer. Hereinafter, reaction resistance and direct-current resistance will be described.

Reaction resistance indicates how difficult it is to cause reaction at the cathode or the anode. Reaction resistance is determined for example by alternate-current impedance measurement using a frequency response analyzer (FRA). For example, alternating-current impedance may be measured as follows: at a temperature of 600°C, hydrogen is passed as fuel gas to the anode at a rate of 100 cc/min and oxygen (or air) is passed to the cathode at a rate of 200 cc/min, and frequency is varied between 0.1 Hz to 100 kHz.

The reaction resistance of the cathode and that of the anode are determined by a Cole-Cole plot of the alternating-current impedance corresponding to each measured frequency. A Cole-Cole plot is a graph in which an alternating-current impedance (a real number) corresponding to each frequency is plotted on the x-axis and imaginary impedance is plotted on the y-axis, and it depicts an arc. In the Cole-Cole plot of the cell structure, typically, an arc attributed to the reaction resistance of the cathode and an arc attributed to the reaction resistance of the anode are formed. Which arc corresponds to the cathode and which arc corresponds to the anode can be determined by varying the concentration of the gas introduced. For example, an arc that becomes large when oxygen introduced to the cathode is reduced in concentration is an arc attributed into the reaction resistance of the cathode. On the other hand, an arc that becomes large when hydrogen introduced into the anode is reduced in concentration is an arc due attributed to the reaction resistance of the anode.

Direct-current resistance is a value in resistance when a direct current is applied to a subject, and it indicates a resistance in a reaction of movement of electrons or the like. Direct-current resistance can be calculated as follows: voltage generated when a current having a plurality of predetermined values is passed through a subject is calculated and direct-current resistance is calculated from a gradient of an I-V characteristic represented with a horizontal axis representing the values of the current and a vertical axis representing the voltage. Voltage may be measured for example as follows: with the current passed for 60 minutes, and at a temperature of 600°C, hydrogen is passed to the anode as fuel gas at a rate of 100 cc/min and air is passed to the cathode at a rate of 200 cc/min, and the current has a value varying between 0 to 600 mA/cm².

The direct-current resistance of the cathode or the direct-current resistance of the anode and the solid electrolyte layer can be determined, for example, as follows:
A cell structure comprising a cathode including a first metal oxide and having a thickness Tc, an anode having a thickness Ta, and a solid electrolyte layer having a thickness Te is produced. The cell structure's direct-current resistance R_{DC} is measured while the thickness Te of the solid electrolyte layer is changed. Typically, the anode contains metal nickel as a catalytic component, and accordingly, the direct-current resistance of the anode may be regarded as substantially zero. Furthermore, as the cathode is fixed in thickness, the direct-current resistance of the cathode is also fixed. That is, the above measurement clarifies a relationship between the thickness Te of the solid electrolyte layer and the direct-current resistance R_{DC}. From this relationship, the direct-current resistance R_{DC} of the entire cell structure when the thickness Te of the solid electrolyte layer is zero is calculated. The calculated value in resistance R_{DC} is a direct-current resistance R_{DCc} of the cathode having the thickness Tc and including the first metal oxide. Further, by subtracting the above-calculated direct-current resistance R_{DCc} of the cathode having the thickness Tc from the direct-current resistance R_{DC} of the entire cell structure, a direct-current resistance R_{DCe} of the solid electrolyte layer having the thickness Te (that is, the sum in direct-current resistance of the solid electrolyte layer and the anode) is obtained.

When the relationship of Rc/Ra ≥ 0.3 is satisfied, the cathode including the first metal oxide has a thickness set to be larger than 15 µm and 30 µm or less. Thereby, together with the resistance Ra of the anode and the solid electrolyte layer, the resistance Rc of the cathode is reduced, and a fuel cell using the cell structure provides output with improved density. If the cathode has a thickness of 15 µm or less, it results in an excessively small reaction field and hence an increased reaction resistance. In contrast, if the cathode has a thickness exceeding 30 µm, gas diffusivity is reduced or electrons travel an increased distance or the like, and direct-current resistance increases. The definition of the thickness of the cathode and the like will be described hereinafter.

When the resistance of the solid electrolyte layer has a high ratio of contribution to the resistance of the cell structure, as conventional, that is, when the relationship of Rc/Ra < 0.3 is satisfied, changing the cathode in thickness does not significantly change the cell resistance R. That is, the thickness of the cathode significantly affects the cell resistance R when the cathode has a high ratio of contribution to the resistance of the cell structure.

The relationship between the resistance Rc and the resistance Ra may satisfy Rc/Ra ≥ 0.35, Rc/Ra ≥ 0.4, or Rc/Ra ≥ 0.6. While the upper limit of Rc/Ra is not particularly limited, it may satisfy Rc/Ra ≤ 1.5, for example. The cell resistance R is not particularly limited. The cell resistance R is, for example, 0.7 Ω • cm² to 1.5 Ω • cm². The resistance Ra of the anode and the solid electrolyte layer is not particularly limited, either. The resistance Ra is, for example, 0.1 Ω • cm² to 0.2 Ω • cm². The resistance Rc of the cathode is not particularly limited, either. The resistance Rc is, for example, 0.5 Ω • cm² to 1.4 Ω • cm².

### (Cathode)

The cathode is preferably in the form of a sheet. The cathode has a porous structure that can adsorb, dissociate and ionize oxygen molecules.

The cathode is formed of material which is a first metal oxide having a perovskite crystal structure. An oxide having a perovskite crystal structure is represented for example by ABO₃, and has a crystal structure similar to CaTiO₃. ABO₃ also includes a crystal structure of ABO_{3 - δ}, where δ represents an oxygen vacancy concentration. Note that an element having a larger ionic radius than the B-site enters the A-site.

As the first metal oxide, a compound represented by the following formula (1):

A1_{1 - x}B1ₓC1_{y}O_{3 - δ} ... formula (1)

is preferably indicated as an example, where 0 < x < 1, 0 < y ≤ 1, and δ represents an oxygen vacancy concentration.

The element A1 is at least one selected from the group consisting of La, Sm, and Ba. The element B1 is at least one selected from the group consisting of Sr and Ca. The element C1 is at least one selected from the group consisting of Fe, Co, Mn, and Ni.

Specifically, the first metal oxide includes lanthanum strontium cobalt ferrite (LSCF, La_{1 - a}SrₐCo_{1 - b}Fe_{b}O_{3 - δ}, 0 < a < 1, 0 < b < 1, and δ represents an oxygen vacancy concentration), lanthanum strontium manganite (LSM, La_{1 - c}Sr_{c}MnO_{3 - δ}, 0 < c < 1, and δ represents an oxygen vacancy concentration), lanthanum strontium cobaltite (LSC, La₁ - _{d}Sr_{d}CoO_{3 - δ}, 0 < d < 1, and δ represents an oxygen vacancy concentration), samarium strontium cobaltite (SSC, Sm_{1 - e} SrₑCoO_{3 - δ}, 0 < e < 1, and δ represents an oxygen vacancy concentration), and the like. Inter alia, LSCF is preferable as the cathode's resistance is easily reduced.

In the present embodiment, the cathode includes a first metal oxide. While the cathode may include a component other than the first metal oxide, the cathode preferably contains the component in a small amount. For example, it is preferable that 99% by mass or more of the cathode is the first metal oxide. That is, the first metal oxide is contained in the cathode preferably at a ratio of 99% by mass or more and 100% by mass or less. The component other than the first metal oxide is not particularly limited, and may be a compound (including a compound which is not ionic conductive) known as a material for a cathode. The ratio of the content of the first metal oxide in the cathode can be determined for example through x-ray diffraction.

The particle diameter of the first metal oxide is not particularly limited. For example, the first metal oxide forming the cathode may have a particle diameter of 0.3 µm to 5 µm, 0.5 µm to 3 µm, or 1 µm to 3 µm. When the first metal oxide forming the cathode has a particle diameter falling within this range, the cathode's resistance is more easily reduced.

The particle diameter of the first metal oxide can be calculated by capturing a photographical image of the cathode in cross section with a scanning electron microscope (SEM). Specifically, initially, in an SEM photographical image of any cross section S of the cathode, a region Rg including ten or more granules is determined. The region Rg may for example be a region of 50 µm × 30 µm. Five granules are arbitrarily selected from the region Rg, and their respective maximum diameters are obtained. Herein, the "maximum diameter" of the granule is a distance between two points on the circumference of the granule in the cross section S that is a maximum distance. These maximum diameters' average value is defined as the particle diameter of the first metal oxide in the cross section S. Similarly, the first metal oxide's particle diameters in any cross sections at four other locations are calculated. The first metal oxide's particle diameters in cross sections at these five locations are averaged to obtain a value, which serves as the particle diameter of the first metal oxide.

The cathode may include a catalyst such as nickel, iron, cobalt, or the like. The catalyst may be a simple metal or a metal oxide. The catalyst's composition can be estimated through energy dispersive x-ray spectroscopy accompanying an SEM (SEM-EDX) and x-ray diffraction combined together. The cathode including the catalyst is formed by mixing and sintering the catalyst and the first metal oxide.

When the cathode is in the form of a sheet, the cathode is not particularly limited in thickness, although it is preferably larger than 15 µm and 30 µm or less, more preferably 20 µm or more and 30 µm or less. When the cathode has a thickness falling within this range, the cathode's internal resistance is more easily reduced. Note that when the cathode is in the form of a sheet, the cathode's "thickness" means a shortest distance between one major surface of the cathode and the other major surface of the cathode. The same applies to the thickness of the solid electrolyte layer and the thickness of the anode described later.

The thickness of the cathode can also be calculated by capturing a photographical image of the cathode in cross section with an SEM. Specifically, initially, in an SEM photographical image of any cross section S of the cathode, an average value in thickness at any five points is obtained. This is defined as a thickness of the cathode in section S. Similarly, the cathode's values in thickness in any cross sections at four other locations are calculated. The cathode's values in thickness in cross section at these five locations are averaged to obtain a value, which serves as the thickness of the cathode. The thickness of the solid electrolyte layer and the thickness of the anode are similarly determined.

### (Solid Electrolyte Layer)

The solid electrolyte layer includes an ion-conductive metal oxide. The ions that move through the solid electrolyte layer are not particularly limited, and may be oxide ions or may be hydrogen ions (protons). When the metal oxide is proton-conductive, the solid electrolyte layer transfers protons generated at the anode to the cathode. When the metal oxide is oxygen ion-conductive, the solid electrolyte layer transfers oxygen ions generated at the cathode to the anode. Inter alia, the solid electrolyte layer is preferably proton conductive. A proton conductive fuel cell (PCFC) can operate, for example, in a medium temperature range of 400°C to 600°C. The PCFC can thus be used in various applications. When the solid electrolyte layer is oxygen ion-conductive, the PCFC can operate in a temperature range of 800°C or lower.

As a proton conductive metal oxide, a compound (a second metal oxide) having a perovskite crystal structure represented by the following formula (2):

A2ₘB2ₙC2_{1 - n}O_{3 - δ} ... formula (2)

is preferably indicated as an example, where 0.85 ≤ m ≤ 1, 0.5 ≤ n < 1, and δ represents an oxygen vacancy concentration.

The element A2 is at least one selected from the group consisting of barium (Ba), calcium (Ca), and strontium (Sr). Inter alia, the element A2 preferably includes Ba from the viewpoint of proton conductivity.

The element B2 is at least one selected from the group consisting of cerium (Ce) and zirconium (Zr). Inter alia, the element B2 preferably includes Zr from the viewpoint of proton conductivity.

The element C2 is at least one selected from the group consisting of yttrium (Y), ytterbium (Yb), erbium (Er), holmium (Ho), thulium (Tm), gadolinium (Gd), indium (In), and scandium (Sc). Inter alia, the element C2 preferably includes Y from the viewpoint of proton conductivity and chemical stability.

Inter alia, it is preferably a compound represented by BaZr_{1 - f}Y_{f}O_{3 - δ} (0 < f ≤ 0.5, BZY), BaCe_{1 - g}Y_{g}O_{3 - δ} (0 < g ≤ 0.5, BCY) and their solid solution or BaZr_{1 - h-i}CeₕYᵢO_{3 - δ} (0 < h < 1, 0 < i ≤ 0.5, BZCY) as it is particularly excellently proton conductive and exhibits high power generation performance. Inter alia, BZY is preferable. A part of Y that occupies the B site may be replaced with another element (e.g., another lanthanoid element), and a part of Ba that occupies the A site may be replaced with another group-2 element (Sr, Ca, or the like).

In the present embodiment, the solid electrolyte layer preferably includes a second metal oxide. While the solid electrolyte layer may contain a component other than the second metal oxide, the former preferably contains the latter in a small amount. For example, it is preferable that 99% by mass or more of the solid electrolyte layer is the second metal oxide. That is, the second metal oxide is contained in the solid electrolyte layer preferably at a ratio of 99% by mass or more and 100% by mass or less. The component other than the second metal oxide is not particularly limited, and can include a compound (including a compound which is not ionic conductive) known as solid electrolyte. The ratio of the content of the second metal oxide in the solid electrolyte layer can be determined for example through x-ray diffraction as set forth above.

When the solid electrolyte layer is in the form of a sheet, the solid electrolyte layer preferably has a thickness of 3 µm to 50 µm, more preferably 5 µm to 30 µm, particularly preferably 5 µm to 20 µm. When the solid electrolyte layer has a thickness in such a range, the solid electrolyte layer's resistance is suppressed to be low. The ratio of the thickness Te of the solid electrolyte layer and the thickness Ta of the anode, or Ta/Te, may be 10 or more. Thus, when the anode is sufficiently thick relative to the solid electrolyte layer, the solid electrolyte layer can be supported by the anode.

The solid electrolyte layer may be a stack of a plurality of solid electrolyte layers. In that case, each solid electrolyte layer may include the second metal oxide different or identical in type. The solid electrolyte layer may for example be a stack of a layer including BZY and a layer including BCY, or a stack of a layer including BZY and a layer including BZCY. In those cases, the stacked layers have close thermal expansion coefficients, which more likely suppresses the cell structure's warpage and deformation.

Between the cathode and the anode, together with the solid electrolyte layer including the second metal oxide (i.e., a first solid electrolyte layer), there may be a layer including a metal oxide other than the second metal oxide (i.e., a second solid electrolyte layer). An example of the metal oxide other than the second metal oxide is an oxygen ion-conductive metal oxide. As the oxygen ion-conductive metal oxide, a compound including zirconium dioxide (hereinafter referred to as a "zirconium compound"), a compound including lanthanum and gallium (hereinafter referred to as a "lanthanum gallate"), and a compound including cerium (hereinafter referred to as a "ceria compound") are preferably indicated as examples. Examples of the ceria compound can include gadolinium-doped ceria (GDC), samarium-doped ceria (SDC), yttrium-doped ceria (YDC), and lanthanum-doped ceria (LDC). Inter alia, GDC is preferred. Disposing the second solid electrolyte layer on the side of the anode or the side of the cathode suppresses a reaction between the first solid electrolyte layer and the anode or the cathode and allows further enhanced power generation performance.

### (Anode)

The anode has an ion-conductive porous structure. For example, in a proton conductive anode, a reaction to oxidize a fuel such as hydrogen introduced through a fuel channel and release protons and electrons (a reaction of oxidation of fuel) is performed.

The anode can be formed of a material for example known as a material used for an anode of a fuel cell. Specifically, it includes a compound including nickel serving as a catalytic component (hereinafter referred to as a "Ni compound"), a composite oxide obtained from the Ni compound and a third metal oxide, or the like. The anode including the composite oxide can be formed for example by mixing and sintering powdery NiO and the third metal oxide provided in the form of powder or the like.

As the proton conductive third metal oxide, for example, the second metal oxide used as a material for the solid electrolyte layer can be indicated as an example. The ratio of the content of the nickel compound (or Ni compound) in the material for the anode is, for example, 40 to 90% by mass, and may be 60 to 90% by mass.

When the anode is in the form of a sheet, the anode is not particularly limited in thickness. The anode may have a thickness for example of 10 µm to 2 mm or 10 µm to 100 µm. When the anode is caused to function as a support for supporting the solid electrolyte layer, the anode's thickness can be selected for example from a range of 100 µm to 2 mm, as appropriate.

Fig. 1 is a cross section of the cell structure according to the present embodiment. While Fig. 1 shows a cell structure 1 in the form of a stack of layers, cell structure 1 is not limited thereto in shape. For example, it may be rolled with anode 3 inside to have a cylindrical shape so as to be hollow. The cylindrical shape has a hollow central portion and has anode 3, solid electrolyte layer 4, and cathode 2 successively, concentrically arranged as viewed from the inside (not shown). In the example shown in Fig. 1, anode 3 is larger in thickness than cathode 2, and functions as a support for supporting solid electrolyte layer 4 (and hence cell structure 1).

### [Method for Manufacturing Cell Structure]

The cell structure can be manufactured in a method for example comprising: a first step of preparing a material for a solid electrolyte layer, a material for an anode and a material for a cathode; a second step of forming a first layer including the material for the anode and a second layer including the material for the solid electrolyte layer on a surface of the first layer, and firing the first and second layers; and a third step of disposing and firing a layer including the material for the cathode on a surface of the formed solid electrolyte layer. Hereinafter, each step will more specifically be described.

### (First Step)

A material for the solid electrolyte layer, a material for the anode, and a material for the cathode are prepared.

The material for the solid electrolyte layer and the material for the anode preferably include a binder from the viewpoint of shapability. The binder includes known materials used in producing ceramic materials, e.g., polymer binders such as cellulose derivatives (cellulose ethers) such as ethyl cellulose, vinyl acetate resins (including saponified vinyl acetate resins such as polyvinyl alcohol), and acrylic resins; and waxes such as paraffin wax.

When the material for the anode is subjected to press forming, the material for the anode includes the binder in an amount for example of 1 to 15 parts by mass (3 to 10 parts by mass in particular) relative to 100 parts by mass of the above composite oxide (or 100 parts by mass of the above Ni compound). Otherwise, the binder is included in an amount for example of 1 to 20 parts by mass (1.5 to 15 parts by mass in particular). The material for the solid electrolyte layer includes the binder in an amount for example of 1 to 20 parts by mass (1.5 to 15 parts by mass in particular) relative to 100 parts by mass of the second metal oxide.

Each material may include a dispersion medium such as water and/or an organic solvent (e.g., hydrocarbons such as toluene (aromatic hydrocarbons); alcohols such as ethanol and isopropanol; and carbitols such as butyl carbitol acetate), as necessary. Each material may include a variety of types of additives, such as a surfactant, a deflocculant (such as polycarboxylic acid), and the like, as necessary.

### (Second Step)

In the second step, a first layer including the material for the anode and a second layer including the material for the solid electrolyte layer are stacked and the stack is fired. Herein, the first layer can also be understood as a precursor for the anode. The second layer can also be understood as a precursor for the solid electrolyte layer.

Each layer may be formed in any method that is selected depending on the layer's desired thickness, as appropriate. For example, when a layer having a thickness of several hundreds µm or more is formed, each material can be shaped by press forming, tape casting, or the like. When a layer having a thickness of several µm to several hundreds µm is formed, each material can be shaped in an existing method such as screen printing, spray coating, spin coating, dip coating and the like. The stack of layers may be formed by combining these methods. The second layer is typically formed by screen printing, spray coating, spin coating, dip coating, or the like.

Specifically, initially, the material for the anode is formed into a predetermined shape by press forming. The predetermined shape is, for example, in the form of a pellet, a plate, a sheet, or the like. Prior to this shaping, the material for the anode may be granulated and then shaped. If necessary, the obtained granules may be disintegrated and then shaped.

Subsequently, the material for the solid electrolyte layer is applied to a surface of the shaped first layer for example by screen printing, spray coating, spin coating, dip coating, or the like to form a second layer. A stack of layers is thus obtained.

Before the material for the solid electrolyte layer is applied, a step of calcining (or provisionally sintering) the first layer may be performed.

Calcination may be performed at a temperature lower than a temperature at which the material for the anode is sintered (e.g., 900°C to 1100°C). Calcination facilitates applying the material for the solid electrolyte layer.

Subsequently, the obtained stack of layers is fired. This is done by heating the obtained stack in an oxygen-containing atmosphere for example to 1200°C to 1700°C. The firing atmosphere's oxygen content is not particularly limited. The firing may be performed for example in an air atmosphere (oxygen content: about 20% by volume) or in pure oxygen (oxygen content: 100% by volume). The firing can be performed at a normal pressure or a high pressure.

Before the stack of layers is fired, a resin component such as a binder included in each material may be removed. That is, after the material for the solid electrolyte layer is applied, the stack of layers is heated in the air to a relatively low temperature of about 500°C to 700°C to remove a resin component included in each material. Thereafter, the above-described firing is performed.

In the second step, the first and second layers are co-sintered. The anode and the solid electrolyte layer are thus formed to be integrated.

### (Third Step)

In the third step, a layer including the material for the cathode is disposed on a surface of the formed solid electrolyte layer and fired. The cathode is thus formed. The firing is performed in an oxygen-containing atmosphere similar the above for example at 800 to 1100°C.

As well as described above, the material for the cathode may be disposed on a surface of the solid electrolyte layer by using a cathode dispersion such as paste or slurry mixed with a binder or the like. The cathode dispersion is disposed for example in the same method as that described above. When the cathode dispersion is subjected to press forming, the cathode dispersion includes the binder in an amount for example of 1 to 15 parts by mass (3 to 10 parts by mass, in particular) relative to 100 parts by mass of the first metal oxide. Otherwise, the binder is included in an amount for example of 1 to 20 parts by mass (1.5 to 15 parts by mass in particular).

The above description includes an embodiment supplementarily described below.

### (Supplementary Note 1)

A cell structure comprising:
a cathode;
an anode; and
a solid electrolyte layer interposed between the cathode and the anode,
the cathode having a resistance Rc, the anode and the solid electrolyte layer having a resistance Ra, the resistance Rc and the resistance Ra satisfying a relationship of Rc/Ra ≥ 0.3,
the cathode including a first metal oxide having a perovskite crystal structure,
the cathode having a thickness larger than 15 µm and equal to or less than 30 µm.

### Examples

Hereinafter, the present invention will be described more specifically based on examples. It should be noted, however, that the following examples do not limit the present invention.

### [Example 1]

### (1) Producing a Cell Structure

A cell structure was produced in the following procedure:
Initially, NiO was mixed with BZY (BaZr_{0.8}Y_{0.2}O_{2.9}) so that 70% by mass of Ni (a catalytic component) was included, and the mixture was disintegrated and kneaded by a ball mill. The obtained powder was press-formed to form a compact (thickness: 550 µm) constituting the anode, and the compact was provisionally sintered at 1000°C. Subsequently, a paste of a mixture of BZY (BaZr_{0.8}Y_{0.2}O_{2.9}) and a water-soluble binder resin (ethylcellulose) was applied to one surface of the compact by screen printing. Thereafter, the compact with the paste applied thereto was heated to 750°C to remove the water-soluble binder resin. Subsequently, in an oxygen atmosphere, a heat treatment is performed at 1400°C to perform co-sintering to thus form an anode and a solid electrolyte layer (thickness: 10 µm).

Subsequently, an LSCF paste of a mixture of powder of LSCF (La_{0.6}Sr_{0.4}Co_{0.2}Fe_{0.8}O_{3 - δ}) serving as the material for the cathode and the above-mentioned water-soluble binder resin is screen-printed on the compact at a surface of the solid electrolyte layer. Thereafter, the compact with the LSCF paste screen-printed thereon was fired in an oxygen atmosphere at 1000°C for 2 hours to produce a cell structure.

A cross section of the cell structure was imaged with an SEM, and the above described method was employed to calculate the thickness of the cathode and the particle diameter of the LSCF included in the cathode. The cathode had a thickness of 16.0 µm, and the LSCF included in the cathode had a particle diameter of 0.5 µm.

### (2) Producing a Fuel Cell

A current collector composed of a porous nickel material (manufactured by Sumitomo Electric Industries, Ltd., Celmet, thickness: 1 mm, porosity: 95% by volume) was disposed on a surface of each cell structure obtained as described above. Further, a separator formed of stainless steel and having a channel was disposed on each current collector to produce a fuel cell A. A lead wire had one end bonded to each current collector. The lead wire had the other end drawn out of the fuel cell and connected to a measuring instrument so that a value of a current and a value of a voltage between each lead wire and another can be measured.

### (3) Reduction process and power generation performance evaluation

Subsequently, the fuel cell A's operating temperature (or reduction temperature) was set at 700°C, and hydrogen was passed to the anode as fuel gas at a rate of 100 cc/min and air was passed to the cathode at a rate of 200 cc/min to reduce NiO included in the anode. The cell structure's direct-current resistance and reaction resistance were measured, and the above-described method was employed to calculate the cathode's resistance Rc and the anode and solid electrolyte layer's resistance Ra. Rc/Ra equals 0.41.

Subsequently, the operating temperature was lowered to 600°C, and a maximum power density was determined. Table 1 shows a result.

### Example 2

A cell structure B and a fuel cell B were produced and evaluated in the same manner as in Example 1 except that the cathode had a thickness of 24.0 µm.LSCF included in the cathode had a particle diameter of 0.9 µm.Rc/Ra equals 0.38.

### Example 3

A cell structure C and a fuel cell C were produced and evaluated in the same manner as in Example 1 except that the cathode had a thickness of 28.5 µm.LSCF included in the cathode had a particle diameter of 0.6 µm.Rc/Ra equals 0.39.

### Comparative Example 1

A cell structure *a* and a fuel cell *a* were produced and evaluated in the same manner as in Example 1 except that the cathode had a thickness of 11.5 µm. LSCF included in the cathode had a particle diameter of 0.8 µm. Rc/Ra equals 0.41.

### Comparative Example 2

A cell structure b and a fuel cell b were produced and evaluated in the same manner as in Example 1 except that the cathode had a thickness of 15.0 µm.LSCF included in the cathode had a particle diameter of 1.1 µm.Rc/Ra equals 0.44.

### Comparative Example 3

A cell structure c and a fuel cell c were produced and evaluated in the same manner as in Example 1 except that the cathode had a thickness of 30.5 µm.LSCF included in the cathode had a particle diameter of 0.8 µm.Rc/Ra equals 0.43.

Examples 1 to 3 and Comparative Examples 1 to 3 each had a cathode including LSCF having a different particle diameter due to differences in conditions for production, such as distribution in particle size of LSCF powder serving as a source material, distribution in temperature inside an electric furnace used for firing, and how LSCF powder dispersed in the LSCF paste.

**Table 1**

| fuel cell | thickness of cathode (µm) | maximum power density (mW/cm²) |
|---|---|---|
| a | 11.5 | 220.9 |
| b | 15.0 | 280.3 |
| A | 16.0 | 321.5 |
| B | 24.0 | 428.9 |
| C | 28.5 | 339.0 |
| c | 30.5 | 176.8 |

### REFERENCE SIGNS LIST

1: cell structure, 2: cathode, 3: anode, 4: solid electrolyte layer.

## Claims

1. A cell structure comprising:
a cathode;
an anode; and
a solid electrolyte layer interposed between the cathode and the anode,
the cathode being in the form of a sheet,
the anode being in the form of a sheet,
the solid electrolyte layer being in the form of a sheet,
the solid electrolyte layer being disposed on the anode,
the cathode being disposed on the solid electrolyte layer,
the cathode having a resistance Rc, the anode and the solid electrolyte layer having a resistance Ra, the resistance Rc and the resistance Ra satisfying a relationship of Rc/Ra ≥ 0.3, the resistances Ra and Rc being measured as defined in the description,
the cathode including a first metal oxide having a perovskite crystal structure,
the cathode having a thickness larger than 15 µm and equal to or less than 30 µm.

2. The cell structure according to claim 1, wherein the first metal oxide is represented by the following formula (1):
A1_{1 - x}B1ₓC1_{y}O_{3 - δ} ... formula (1),
where an element A1 is at least one selected from the group consisting of La, Sm, and Ba, an element B1 is at least one selected from the group consisting of Sr and Ca, an element C1 is at least one selected from the group consisting of Fe, Co, Mn, and Ni, 0 < x < 1, 0 < y ≤ 1, and δ represents an oxygen vacancy concentration.

3. The cell structure according to claim 1 or 2, wherein
the solid electrolyte layer includes a second metal oxide having a perovskite crystal structure, and
the second metal oxide is a proton conductor represented by the following formula (2):
A2ₘB2ₙC2_{1- n}O_{3 - δ} ... formula (2),
where an element A2 is at least one selected from the group consisting of Ba, Ca and Sr, an element B2 is at least one selected from the group consisting of Ce and Zr, an element C2 is at least one selected from the group consisting of Y, Yb, Er, Ho, Tm, Gd, In and Sc, 0.85 ≤ m ≤ 1, 0.5 ≤ n < 1, and δ represents an oxygen vacancy concentration.

4. The cell structure according to any one of claims 1 to 3, wherein the solid electrolyte layer has a thickness of 5 µm or more and 30 µm or less.

5. The cell structure according to any one of claims 1 to 4, wherein the cathode has a thickness of 20 µm or more and 30 µm or less.

## Patentansprüche

1. Zellstruktur, umfassend:
eine Kathode;
eine Anode; und
eine Festelektrolytschicht, die zwischen der Kathode und der Anode eingefügt ist,
wobei die Kathode in Form eines Blatts ist,
die Anode in Form eines Blatts ist,
die Festelektrolytschicht in Form eines Blatts ist,
die Festelektrolytschicht auf der Anode angeordnet ist,
die Kathode auf der Festelektrolytschicht angeordnet ist,
die Kathode einen Widerstand Rc aufweist, die Anode und die Festelektrolytschicht einen Widerstand Ra aufweisen, wobei der Widerstand Rc und der Widerstand Ra eine Beziehung von Rc/Ra ≥ 0,3 erfüllen, die Widerstände wie in der Beschreibung definiert gemessen werden,
die Kathode ein erstes Metalloxid mit einer Perovskit-Kristallstruktur beinhaltet,
die Kathode eine Dicke größer als 15 µm und gleich oder kleiner als 30 µm aufweist.

2. Zellstruktur gemäß Anspruch 1, wobei das erste Metalloxid durch die folgende Formel (1) repräsentiert wird:
A1₁₋ₓB1ₓC1_{y}O_{3-δ} Formel (1),
wobei ein Element A1 zumindest eins ist, das ausgewählt wird aus der Gruppe, die aus La, Sm und Ba besteht, ein Element B1 zumindest eins ist, das ausgewählt wird aus der Gruppe, die aus Sr und Ca besteht, ein Element C1 zumindest eins ist, das ausgewählt wird aus der Gruppe, die aus Fe, Co, Mn und Ni besteht, 0 < x < 1, 0 < y ≤ 1, and δ eine Sauerstoffvakanz-Konzentration repräsentiert.

3. Zellstruktur gemäß Anspruch 1 oder 2, wobei
die Festelektrolytschicht ein zweites Metalloxid mit einer Perovskit-Kristallstruktur beinhaltet, und
das zweite Metalloxid ein Protonenleiter ist, der durch die folgende Formel (2) repräsentiert wird
A2ₘB2ₙC2₁₋ₙO_{3-δ} Formel (2),
wobei ein Element A2 zumindest eins ist, das ausgewählt wird aus der Gruppe, die aus Ba, Ca und Sr besteht, ein Element B2 zumindest eins ist, das ausgewählt wird aus der Gruppe, die aus Ce und Zr besteht, ein Element C2 zumindest eins ist, das ausgewählt wird aus der Gruppe, die aus Y, Yb, Er, Ho, Tm, Gd, In und Sc besteht, 0,85 ≤ m ≤ 1, 0,5 ≤ n n < 1, and δ eine Sauerstoffvakanz-Konzentration repräsentiert.

4. Zellstruktur gemäß einem der Ansprüche 1 bis 3, wobei die Festelektrolytschicht eine Dicke von 5 µm oder mehr und 30 µm oder weniger aufweist.

5. Zellstruktur gemäß einem der Ansprüche 1 bis 4, wobei die Kathode eine Dicke von 20 µm oder mehr und 30 µm oder weniger aufweist.

## Revendications

1. Structure de pile comprenant :
une cathode ;
une anode ; et
une couche d'électrolyte solide interposée entre la cathode et l'anode,
la cathode étant sous la forme d'une feuille,
l'anode étant sous la forme d'une feuille,
la couche d'électrolyte solide étant sous la forme d'une feuille,
la couche d'électrolyte solide étant disposée sur l'anode,
la cathode étant disposée sur la couche d'électrolyte solide,
la cathode ayant une résistance Rc, l'anode et la couche d'électrolyte solide ayant une résistance Ra, la résistance Rc et la résistance Ra satisfaisant à la relation Rc/Ra ≥ 0,3, les résistances Ra et Rc étant mesurées comme défini dans la description,
la cathode incluant un premier oxyde métallique ayant une structure cristalline de perovskite,
la cathode ayant une épaisseur supérieure à 15 µm et inférieure ou égale à 30 µm.

2. Structure de pile selon la revendication 1, dans laquelle le premier oxyde métallique est représenté par la formule (1) suivante :
Al₁₋ₓB1ₓC1_{y}O_{3-δ ...} formule (1),
où l'élément A1 est au moins l'un choisi dans le groupe constitué par La, Sm et Ba, l'élément B1 est au moins l'un choisi dans le groupe constitué par Sr et Ca, l'élément C1 est au moins l'un choisi dans le groupe constitué par Fe, Co, Mn et Ni, 0 < x < 1, 0 < y ≤ 1, et δ représente la concentration de lacunes d'oxygène.

3. Structure de pile selon la revendication 1 ou 2, dans laquelle
la couche d'électrolyte solide inclut un deuxième oxyde métallique ayant une structure cristalline de perovskite, et
le deuxième oxyde métallique est un conducteur de protons représenté par la formule (2) suivante :
A2ₘB2ₙC2₁₋ₙO_{3-δ} ... formule (2),
où l'élément A2 est au moins l'un choisi dans le groupe constitué par Ba, Ca et Sr, l'élément B2 est au moins l'un choisi dans le groupe constitué par Ce et Zr, l'élément C2 est au moins l'un choisi dans le groupe constitué par Y, Yb, Er, Ho, Tm, Gd, In et Sc, 0,85 ≤ m ≤ 1, 0,5 ≤ n < 1, et δ représente la concentration de lacunes d'oxygène.

4. Structure de pile selon l'une quelconque des revendications 1 à 3, dans laquelle la couche d'électrolyte solide a une épaisseur de 5 µm ou plus et 30 µm ou moins.

5. Structure de pile selon l'une quelconque des revendications 1 à 4, dans laquelle la cathode a une épaisseur de 20 µm ou plus et 30 µm ou moins.
